# EUROPÄISCHE PATENTSCHRIFT

(11) **EP 0 705 156 B1**
(45) Veröffentlichungstag und Bekanntmachung des Hinweises auf die Patenterteilung: **03.09.1997**
(21) Anmeldenummer: 94918381.8
(22) Anmeldetag: 27.05.1994
(51) Int. Cl.: B24B 49/14, G05B 19/18

(54) **VERFAHREN ZUR VERMEIDUNG VON ÜBERBEANSPRUCHUNGEN EINES WERKSTÜCKES BEIM SCHLEIFEN**
PROCESS FOR AVOIDING OVERSTRESSING A WORKPIECE DURING GRINDING
PROCEDE PERMETTANT D'EVITER QUE DES CONTRAINTES EXCESSIVES NE S'EXERCENT SUR UNE PIECE PENDANT LE MEULAGE

(30) Priorität: 01.06.1993 DE 4318102
(43) Veröffentlichungstag der Anmeldung: 10.04.1996
(73) Patentinhaber: ZF FRIEDRICHSHAFEN Aktiengesellschaft, 88038 Friedrichshafen (DE); Reilhofer KG, 85757 Karlsfeld (DE)
(72) Erfinder: GUGENHEIMER, Robert, D-88090 Immenstaad (DE); REILHOFER, Johannes, D-85757 Karlsfeld (DE); BINSMAIER, Werner, D-85221 Dachau (DE)
(74) Vertreter: Zietlow, Karl-Peter
(86) Internationale Anmeldenummer: EP9401724
(87) Internationale Veröffentlichungsnummer: WO9427783

(56) Entgegenhaltungen:
- DE-A- 4 025 552
- DE-A- 4 119 871
- PATENT ABSTRACTS OF JAPAN vol. 15, no. 290 (M-1139) 23. Juli 1991 & JP,A,03 104 561 (KOMATSU LTD.) 1. Mai 1991
- PATENT ABSTRACTS OF JAPAN vol. 13, no. 133 (M-809) 4. April 1989 & JP,A,63 300 865 (KOYAMA K.K.) 8. Dezember 1988
- DATABASE WPI Week 8140, Derwent Publications Ltd., London, GB; AN 81-K3589D & SU,A,795 914 (MIKHELKEVICH V N) 25. Januar 1981
- DATABASE WPI Week 8205, Derwent Publications Ltd., London, GB; AN 82-B1271E & SU,A,823 082 (VITEB MACH CONS WKS) 5. Mai 1981

## Beschreibung

Die Erfindung betrifft ein Verfahren nach dem Oberbegriff des Anspruchs 1 und eine Vorrichtung gemäß Oberbegriff des Anspruchs 16.

Bei der Fertigung qualitativ hochwertiger Bauteile, wie Zahnräder oder andere Werkstücke mit speziellen Profilen, wird es immer wichtiger, zur Erlangung einer hohen Präzision und Formgenauigkeit nach der Vorbearbeitung und dem Härten eine Feinbearbeitung nachzuschalten.
Als Feinbearbeitungsverfahren kommt dabei häufig das Schleifen zum Einsatz. Hierbei wird ein Aufmaß abgetragen, das sich einerseits aus der Vorbearbeitung vor dem Härten und andererseits aus Härteverzügen ergibt. Im Falle der Hartbearbeitung von Zahnrädern beträgt das Aufmaß meistens zwischen einem und drei Zehntel Millimeter.

Der Schleifvorgang soll durch das Abnehmen dieses Aufmaßes die endgültige Form erzeugen, für die teilweise Abweichungen von nur wenigen Mikrometern zulässig sind. Andererseits erfordern Wirtschaftlichkeitsüberlegungen, daß die Hart- bzw. Feinbearbeitung in möglichst kurzer Zeit vorgenommen wird, um einen maximalen Werkstückausstoß pro Maschine und pro Zeiteinheit zu erreichen.

Diese beiden gegenläufigen Forderungen haben in der Vergangenheit zur Entwicklung leistungsfähiger Schleifverfahren geführt, wobei neben den konventionellen Schleifstoffen (z. B. Siliziumkarbid, Edelkorund) auch Diamanten und kubisch kristallines Bornitrid zum Einsatz kommen.

In der Praxis wird der Feinbearbeitungsvorgang mit hohen bezogenen Zeitspanvolumina, d. h. mit einer Maximalzahl abgenommener Kubikmillimeter Aufmaß pro Sekunde Schleifzeit und pro Millimeter Schleifscheibenbreite, durchgeführt. Die Grenze der Optimierungsfähigkeit ist jedoch dort erreicht, wo mit derart hohen Vorschüben gearbeitet wird, daß die Schleifscheibe an der Kontaktfläche zum Werkstück lokal derart hohe Temperaturen erzeugt, daß thermische Gefügeveränderungen in den Werkstücken auftreten. Der Fachmann spricht hier von Schleifbrand oder Heißbrand und versteht darunter eine thermische Schädigung des Werkstückes, so daß dieses Ausschuß wird.
Der Schleifbrand kann durch unterschiedliche Ursachen ausgelöst werden. Dabei sind die häufigsten Ursachen:
- eine verbrauchte Schleifscheibe;
- eine mit Abrieb zugesetzte Schleifscheibe;
- Aufmaßfehler und Zentrierfehler;
- ein zu hoher Vorschub;
- Fehler beim Montieren der Werkstücke;
- ungenügende Kühlung.

Für die industrielle Produktion ist daher die Schleifbrandüberwachung ein wichtiges Qualitätskriterium. Häufig werden dazu Ätzverfahren eingesetzt, wobei stichprobenartig Werkstücke in verschiedenen Bädern geätzt werden, um daraus eine aufgetretene Änderung der Randschichten des Gefüges sichtbar zu machen. Das Verfahren ist jedoch aufwendig und ermöglicht keine Prüfung aller Werkstücke. Es kann erst nach der Bearbeitung eingesetzt werden und ermöglicht keine Überwachung der Werkstücke auf Schleifbrand während des Schleifens.

Es ist nun aus der DE-PS 40 25 552 ein Verfahren und eine Vorrichtung zur Erkennung von thermischen Überbeanspruchungen eines Werkstückes bekannt. Dabei wird die Temperaturerhöhung an der dem Schleifvorgang unterworfenen Fläche ermittelt und dieser Istwert mit einem Referenzwert verglichen. Der Referenzwert ist unter den gleichen Parametern des Schleifvorganges mit einer Schleifscheibe ermittelt worden, die zum Entstehen von Schleifbrand an einem Referenzwerkstück geführt hat. Der Schleifvorgang mit der jeweiligen Schleifscheibe wird beendet, sobald eine Temperaturerhöhung festgestellt wird, die unter Berücksichtigung eines vorgebbaren Sicherheitsabstandes der kritischen, Schleifbrand bewirkenden Temperatur entspricht. Da die Ermittlung der Temperatur am zu bearbeitenden Werkstück als schwierig und ungenau erkannt wurde, wurde vorgeschlagen, anstelle der durch den Schleifvorgang erzeugten Temperaturerhöhung eine hierdurch bedingte geometrische Formänderung des Werkstückes heranzuziehen. Zu dieser Referenzmessung müssen jedoch aufwendige Meßvorrichtungen an den zu bearbeitenden Werkstücken angebracht werden, die eine einfache Handhabung der Schleifbranderkennung verhindern und verläßliche Meßergebnisse nicht zulassen. Dieses Verfahren bietet auch nur die Möglichkeit, bereits entstandenen Schleifbrand zu erkennen, also eine Schadensfeststellung durchzuführen. Eine Vermeidung von Schleifbrand läßt sich damit nicht vornehmen.

Weiterhin ist aus PATENT ABSTRACTS OF JAPAN vol. 15, no. 290 (M-1139) ein Verfahren bekannt, das eine Beeinträchtigung der Oberflächenhärte von Werkstücken durch Schleifbrand vermeiden soll. Die Oberflächenhärte stellt dabei eine Funktion der Motorleistung (WT) des Schleifmotors dar. Diese Motorleistung (WT) wird überwacht und mit einer Grenzmotorleistung (WU), die einer Grenzoberflächenhärte (Hd) entspricht und die in einem Speicher abgelegt ist, verglichen. Erreicht oder übersteigt der gemessene Wert der Motorleistung (WT) den gespeicherten Referenzwert (WU), so wird ein Signal an die Steuereinrichtung der Schleifeinrichtung abgegeben. Dort wird das Vorschubsignal zurückgesetzt oder die Drehzahl des Antriebsmotors reduziert. Eine Ermittlung der auf das Werkstück beim Schleifen übertragenen kinetischen Energie findet nicht statt.

Der Erfindung liegt die Aufgabe zugrunde, ein Verfahren zur Vermeidung von thermischen Überbeanspruchungen an Werkstücken beim Schleifen nach dem Oberbegriff des Anspruchs 1 bzw. eine Vorrichtung gemäß Oberbegriff des Anspruchs 16 so weiterzubilden, daß eine zuverlässige Vermeidung von Schleifbrand erreicht wird.

Die Aufgabe wird gelöst durch ein Verfahren mit den Merkmalen des Anspruchs 1 bzw. durch eine Vorrichtung gemäß Anspruch 16.

Bei Untersuchungen hat sich herausgestellt, daß, unabhängig von der Qualität des Schleifens, ob schneidend oder reibend, immer alle aufgenommene mechanische Energie in thermische Energie umgesetzt wird. Nahezu alle dem System von der Werkzeugmaschinenspindel zugeführte Energie in Form von Antriebsenergie wird in thermische Energie im Schleifprozeß umgesetzt und muß vom Werkstück verkraftet werden. Der entstehende Schleifbrand wirkt sich aus als eine Umsetzung von zu viel mechanischer Energie in thermische Energie pro Zeiteinheit und pro bearbeiteter Oberfläche.

Besondere Schwierigkeiten bereitet das Schleifen von Zahnrädern. Hierbei werden in jeweils einem Schleifgang zwei Zahnflanken geschliffen, die zu zwei verschiedenen, nebeneinanderliegenden Zähnen gehören und die beide zwischen sich eine Zahnlücke bilden.

Für die einzelne Zahnflanke gibt es positionsabhängig eine maximal ertragbare Oberflächentemperatur und damit eine maximal ertragbare Verlustleistung.
Zur Erkennung von Schleifbrand oder eines Schleifbrandrisikos ist daher die Menge der umgesetzten Energie zu messen und zu bewerten. Dabei ist die Energieverteilung jeweils beider gleichzeitig geschliffener Zahnflanken der benachbarten Zähne zu bestimmen. Hierdurch kann auch bei ungleichmäßiger Aufmaßverteilung und daraus resultierender Ungleichmäßigkeit bei der Temperaturentwicklung an den beiden zu schleifenden Zahnflanken die Entstehung von thermischen Schäden besser erkannt werden.

Für die beiden gleichzeitig zu bearbeitenden Zahnflanken wird die umgesetzte thermische Energie ermittelt. Hierbei muß festgestellt werden, wie sich die eingeleitete Energie auf die beiden Zahnflanken verteilt. Wichtig ist nicht das Maß der eingeleiteten Gesamtenergie, sondern der Höchstwert, der auf jeweils einer Zahnflanke auftritt.
Überschreitet die gemessene thermische Energie einen vorgegebenen Schwellwert, so ist auf das Vorliegen von Schleifbrand zu schließen.
Liegt nun bei einem vorgegebenen Vorschub die gemessene Energie noch deutlich unterhalb des Schwellwertes, so kann der Vorschub erhöht werden. Wird der Vorschub so geregelt, daß das Risikomaß immer unterhalb des Schwellwertes bleibt, kann bei ansonsten guten Bedingungen (gute Scheibe, geringe Aufmaßprobleme) mit hohem Vorschub gefahren werden. Die Orientierung des Vorschubes geschieht am Schleifscheibenzustand und regelt dabei ständig aufmaßgerecht.

Erfindungsgemäß wird zur Feststellung der aufgewendeten Energie die Spindel-Drehzahl erfaßt. Daraus läßt sich die Energie der Antriebseinheit ermitteln.

Durch eine ständige Online-Ermittlung des Risikos für auftretenden Schleifbrand kann eine Optimierung des Vorschubs erzielt werden, die zu einer sicheren Schleifbrandvermeidung führt.
Schleifbrand tritt in erster Linie aufgrund zu hohen Druckes in der Lücke und infolge zu hohen Vorschubs beim Schruppen relativ zur aktuellen Schleifeigenschaft der Scheibe und zum aktuellen Aufmaß auf. Der erhöhte Druck erzeugt eine Temperaturentwicklung über eine kritische Schwelle hinaus.
Bei Messungen hat sich ergeben, daß zum geschliffenen Lückenende hin ein Druckanstieg und ein höheres Risiko des Schleifbrands auftritt. Insbesondere im letzten Viertel der Lücke tritt dieses Phänomen auf. Zurückzuführen ist dies auf Akkumulationseffekte bei der Temperaturentwicklung während des Schleifens.

Die Energie, die in der Zahnlücke während des Schleifvorganges in thermische Energie umgesetzt wird, ist im wesentlichen bestimmt durch das Aufmaß und die Schleifkraft der Schleifscheibe. Die Temperatur wiederum ist bestimmt durch die aufgewandte Energie pro Zeit und Fläche. Die Zeit wird über den Vorschub bestimmt, während die Schleiffläche eine konstante Größe ist. Die Konstanz der Fläche ist nur dann nicht gegeben, wenn der Teilungsfehler, in Abhängigkeit davon, wie mittig die Schleifscheibe in die Zahnlücke eingefahren ist, so groß ist, daß eine Flankenseite teilweise oder ganz ungeschliffen bleibt. Dann aber hat die andere Flanke ein entsprechend hohes Aufmaß. Der Teilungsfehler ergibt sich in Abhängigkeit davon, wie mittig die Schleifscheibe in die Zahnlücke eingefahren ist.
Der Energieaufwand pro Zeit drückt sich aus in der Reduzierung der Drehzahl der Antriebsspindel und in der Änderung des Spindelstromes.
Wird nun zusätzlich der Strom des Teilapparates gemessen, ergibt sich eine Aussage über die Aufmaßverteilung auf die beiden gerade bearbeiteten Flanken. Liegt ein Teilungsfehler vor, dann wird die Energie unsymmetrisch auf den Flanken umgesetzt und eine Flanke wird heißer als die andere. Das Aufmaß bzw. die Aufmaßverteilung stellt einen besonders kritischen Schleifbrandfaktor dar.

Über obengenannte Zusammenhänge ist es möglich, ein Maß für das Schleifbrandrisiko und, bei Angabe von Schwellwerten, die Schleifbranderkennung während des Entstehens zu rechnen.

Die zu ermittelnden Drehzahlen können über Induktivaufnehmer oder Drehimpulsgeber aufgezeichnet werden. Jede andere Art der Drehzahlfeststellung, wie Tachogeneratoren, Drehwinkelsensoren etc., können ebenfalls angewendet werden. Der Motorstrom vom Teilapparat kann über einen Shunt- oder Nebenschluß-Widerstand im Regelteil des den Teilapparat antreibenden Elektromotors gemessen werden.
Die Drehzahlsignale erfahren beim Eintritt der Schleifscheibe in eine Zahnlücke zunächst eine starke Reduzierung. Diese Reduzierung der Drehzahl kann bis zu 8 % der Leerlaufdrehzahl betragen. Die Drehzahl erlangt dann einen stabilen Wert während der Bearbeitungszeit in der Lücke. Bei Lückenaustritt steigt die Drehzahl an und erreicht anschließend Leerlaufdrehzahl. Dieser Drehzahlverlauf wiederholt sich bei der Bearbeitung jeder Zahnlücke.

Die Schleifbranderkennung stützt sich hier im wesentlichen auf den stabilen Drehzahlwert innerhalb der Lücke. Damit können die Schleifbrandarten am Lückenende oder über die ganze Lücke erfaßt werden. Für die Schleifbrandsituation am Lückeneintritt ist der Gradient des Drehzahlsignals am Lückeneintritt auszuwerten. Je steiler der Abfall, desto höher ist das Aufmaß bzw. desto unsymmetrischer ist die Aufmaßverteilung.

Ein weiteres Signal, das zur Erkennung des Schleifbrandrisikos insbesondere bei der Bearbeitung von Zahnrädern heranzuziehen ist, ist der Motorstrom des Teilapparates. Der hier bezeichnete Motorstrom ist der Strom, der nötig ist, um die Drehung der Achse des Teilapparates während des Schleifens einer Schrägverzahnung vorzunehmen. Ausgewertet wird der Bereich innerhalb der Zahnlücke. Der Motorstrom ändert sich durch den Aufmaßunterschied zwischen linker und rechter Zahnflanke, der die Schleifscheibe zum Mit- oder Gegendrehen der Achse des Teilapparates bringt. Entsprechend der Unsymmetrie der Zahnflanken oder auch der unsymmetrischen Abnutzung der Schleifscheibe ist mehr oder weniger Strom notwendig, um den richtigen Schleifwinkel zu halten. Der Teilapparat, der als Werkstückhalter fungiert, dient gleichzeitig als Mittel zur Aufnahme des eingeleiteten Momentes.

Zur Vermeidung von fehlerhaften Einflüssen aufgrund von Netzschwankungen wird der Motorstrom der Antriebsspindel als weitere Einflußgröße herangezogen. Treten durch die Netzschwankungen verursachte Drehzahlabfälle auf, wird mit Hilfe des Motorstroms der Antriebsspindel eine Leistungsänderung mitberücksichtigt. Ohne diese zusätzliche Berücksichtigung würde durch niedrigere Drehzahlwerte auf eine vermeintlich hohe Energieumsetzung geschlossen und der Vorschub dann unnötigerweise zurückgenommen.

Maschinenintern steuern die permanent ausgewerteten Einflußgrößen Motorstrom und Drehzahl den Vorschub der Antriebsspindel. Dabei wird der Vorschub immer so gefahren, daß die ermittelten und gerechneten Werte immer eine umgesetzte Energie unterhalb eines vorgegebenen Schwellwertes ergeben. Der Vorschub kann dabei individuell so geregelt werden, daß die umgesetzte Energie mit einem gewissen Sicherheitsabstand unterhalb des Schwellwertes nahezu abstandsgleich dazu verläuft. Tritt nun eine Erhöhung der umgesetzten Energie auf, wird der Vorschub entsprechend dieser Energieerhöhung zurückgenommen, so daß keine Überschreitung des Schwellwertes stattfindet. Dadurch tritt in dem bearbeiteten Werkstück kein Schleifbrand auf und das Werkstück kann ohne Einschränkung weiterbearbeitet werden. Die Bearbeitungszeit wird durch den verringerten Vorschub zwar verlängert, aber das Werkstück muß auch nicht wegen Schleifbrand aussortiert werden. So läßt sich der Vorschub nötigenfalls bis auf einen vorgebbaren Minimalwert herunterfahren.
Aus der Erfahrung hat sich aber auch gezeigt, daß verschmutzte und von Schleifbrand betroffene Schleifscheiben sich nach einer gewissen Zeit einer Selbstreinigung durch die bearbeiteten Werkstücke unterzogen haben. Schleifscheiben, die einmal Schleifbrand produziert haben oder in die Nähe der Schleifbrandproduktion geraten sind, können also durchaus anschließend wieder zu Schleifscheiben mit normalen Arbeitsbedingungen werden. Daraufhin kann bei einer permanenten Überwachung der Vorschub der Antriebsspindel nach einer erfolgten Selbstreinigung auch wieder erhöht werden und wieder an den Schwellwert herangefahren werden.

Die Umsetzung der gewonnenen Kenntnisse über den Schleifbrandzustand des bearbeiteten Werkstücks läßt sich in vielerlei Variationen vornehmen.
Einerseits kann eine direkte Anzeige dem Bediener der Schleifmaschine anzeigen, daß ein Werkstück Schleifbrand erlitten hat. Welches Werkstück betroffen ist, läßt sich ebenfalls unmittelbar anzeigen. Dazu können optische Anzeigeeinrichtungen, beispielsweise in Form von Leuchtdioden, Skalen mit Flüssigkristallanzeige, Bildschirme oder sonstige derartige Mittel, vorgesehen sein. Zur Warnung lassen sich vorteilhafterweise auch akustische Anzeigemittel vorsehen, die einen Bediener auf die Beobachtung beispielsweise von optischen Anzeigemittel hinweisen.

Eine Anzeigeeinrichtung könnte beispielsweise folgendermaßen ausgestaltet sein:
Auf einem Display sind Skalen für jedes Zahnrad und eine Skala für den Schleifscheibenzustand vorgesehen. Jede Skala führt Extremwertzeiger mit, die anzeigen, wie hoch das Schleifbrandmaß bei einem Zahnrad bereits gestiegen ist. Diese Information wird für jeden zahnrädertragenden Dorn vor Schleifbeginn zurückgesetzt und bis zum Schleifende aufgebaut. Bei Schleifende kann der Bediener anhand von Schwellwerten sehen, welche Räder Schleifbrand hatten und welche nicht. Über die Symmetriemessung mit Hilfe des Motorstroms des Teilapparates und über die Drehzahlabweichung läßt sich auch ein Maß für den Scheibenzustand finden. Dieses Maß läßt sich ebenfalls anzeigen. Die von Schleifbrand befallenen Zahnräder können vom Bediener aussortiert werden und bleiben aus dem Weiterverarbeitungsprozeß heraus. Spätere Reklamation von beispielsweise in Getrieben eingebauten Zahnrädern mit Schleifbrand können somit vermieden werden. Das vermeidet Reklamationsärger, Reklamationskosten und anschließende hohe Reparaturkosten.
Zusätzlich zur Ausgabe auf einem Display werden die ermittelten Daten und die erfolgte Analyse aus diesen Werten in einem internen Speicher protokolliert. Dieser Speicher ist vorzugsweise separat batteriegepuffert, so daß auch bei Stromausfall der Bearbeitungsmaschine die Sicherung der Daten bestehenbleibt. In dem Protokoll werden z. B. Datum, Zeit und Überwachungsergebnisse für jeden zahnrädertragenden Dorn aufgezeichnet und können jederzeit nachträglich abgerufen werden.

Anstatt einer Displayanzeige läßt sich auch eine vereinfachte Anzeigeeinrichtung in Form von Leuchtdioden anordnen. Dabei könnte eine grüne Leuchtdiode "kein Schleifbrand" anzeigen und eine rote Leuchtdiode "Schleifbrand".

Bei den vorgenannten Anzeigemethoden nimmt man in Kauf, daß produzierte Werkstücke mit Schleifbrand auftauchen. Diese Werkstücke werden vom Bediener der Bearbeitungsmaschine dann aussortiert und gelangen nicht in die Weiterverarbeitung. Vorteilhafterweise soll die Entstehung von Schleifbrand aber vollständig vermieden werden. Dazu muß das Maß für das Schleifbrandrisiko berechnet werden. Liegt dieses Risiko bei einem gegebenen Vorschub deutlich unter einem kritischen Schwellwert, so kann der Vorschub erhöht werden. Der kritische Schwellwert zeigt an, ab wann Schleifbrandgefahr besteht.

In der Bearbeitungsmaschine arbeitet das Regelsystem folgendermaßen: Zunächst wird ein neuer, mit Zahnrädern bestückter Dorn in die Bearbeitungsmaschine eingelegt. Der für diesen Dorn neue Vorschub wird an dem eingestellten Vorschub des letzten Dorns orientiert, aber zunächst nur auf die Hälfte dieses Wertes eingestellt. Dann wird eine Lücke über alle montierten Zahnräder geschruppt. Orientiert an den in der Zahnlücke aufgenommenen Werten und bezogen auf den bestehenden Abstand zum kritischen Schwellwert wird der Vorschub gesteigert oder gegebenenfalls zurückgenommen, um die Bearbeitungsmaschine in möglichst geringem Abstand unterhalb des kritischen Schwellwertes zu fahren. Daraus resultiert eine kurze Bearbeitungszeit der einzelnen Werkstücke. Die Anpassung des Vorschub zu höheren oder auch niedrigeren Werten wird von Zahnlücke zu Zahnlücke wiederholt und wird jeweils aus den ermittelten Werten gerechnet. Mit diesem Regelsystem orientiert man sich pro Dorn am jeweiligen Schleifscheibenzustand. Dabei bewegt man sich mit angemessener Vorsicht an den kritischen und Schleifbrand anzeigenden Schwellwert heran und regelt so, daß unterschiedliche Aufmaßverteilungen an den Zahnflanken einer Zahnlücke berücksichtigt werden. Durch den optimal hoch eingestellten Vorschub, der alle aktuell vorliegenden Parameter berücksichtigt, kann der Durchsatz an bearbeiteten Werkstücken deutlich erhöht werden. Eine 100-Prozent-Schleifbrandüberprüfung findet dabei gleichzeitig mit statt, so daß von der Bearbeitungsmaschine keinerlei Ausschuß produziert wird. Die Materialverluste sind daher nahezu Null. Durch das Regelsystem wird die Reinigungsmöglichkeit der Schleifscheiben mitberücksichtigt, so daß nach Rücknahme des Vorschubs aufgrund einer verunreinigten Schleifscheibe der Vorschub nach einer Selbstreinigung der Scheibe wieder erhöht werden kann. Die Scheibe bleibt in Benutzung, läßt sich weiterverwenden, muß nicht ausgetauscht und entfernt werden, sondern kann weiterhin produzierend eingesetzt werden. Auch dieser Aspekt führt zu Kostensenkungen, ohne daß Werkstücke der Gefahr des Schleifbrandes ausgesetzt werden.

Die Messung der Stromaufnahme des Teilapparates oder eines äquivalenten Signals, aus dem auf das Drehmoment, das in den Werkstücke tragenden Königsdorns eingeleitet wird, geschlossen werden kann, führt zu einem Maß für die Unsymmetrie der Aufmaßverteilung der beiden Zahnflanken einer Zahnlücke.

Ursache für den Schleifbrand ist die Umsetzung von zuviel kinetischer Energie in thermische Energie. Da die thermische Energie, die in ein Werkstück eingeleitet wird, gar nicht oder nur mit sehr großem Aufwand an den Werkstücken oder den Werkzeugen gemessen werden kann, ist eine nahezu verzögerungsfreie Messung der momentan vorhandenen kinetischen Energie der Antriebsspindel der entsprechende Beurteilungsfaktor.
Die kinetische Energie der Antriebsspindel setzt sich zusammen aus der Rotationsenergie des Spindelmotors und der Antriebsspindel und aus der elektrischen Leistung, die zum aktuellen Zeitpunkt im Motor in kinetische Energie umgewandelt wird.

Der Betrag der umgewandelten kinetischen Energie in den Zahnflanken zeigt sich unmittelbar durch den Gradienten des Drehzahlabfalls. Darum muß die Drehzahl der Antriebsspindel gemessen und bewertet werden. Dazu lassen sich als günstige Methode von der Antriebsspindel abgegebene Drehimpulse auswerten. Dazu kann beispielsweise ein magnetischer Aufnehmer am oberen Teil des Spindelgehäuses angeordnet sein und das periodische Umlaufen von an der Spindel befestigten Bauteilen messen. Solche Bauteile könnten an der Spindel angeordnete Verschraubungen sein. Daraus lassen sich dann Rotationsintervalle berechnen.

Jede Änderung der Reibung in der Zahnlücke und damit jede Veränderung der Leistungsumsetzung prägt die augenblickliche Drehzahl.
Die umgesetzte Energie verteilt sich auf die beiden Zahnflanken, die gerade in Bearbeitung sind. Wie sie sich im jeweiligen Augenblick genau verteilt, kann aus dem Strom des Teilapparates ermittelt werden. Der Teilapparat als Komponente der Werkzeugmaschine dreht den die Werkstücke tragenden Dorn, während sich die Schleifspindel längs dazu bewegt. Je nach Unsymmetrie des Aufmaßes sind die Flanken des Zahnrades bestrebt, die Drehung des Teilapparates zu unterstützen oder zu hemmen. Der Antrieb des Königsdorns ist bestrebt, diese Unterstützung oder Hemmung zu beseitigen und übt dazu ein bremsendes oder beschleunigendes Moment aus. Dies drückt sich in der Größe und in der Polarität der vom Teilapparat aufgenommenen Leistung aus. Somit ist der aufgenommene Strom des Teilapparates ein Maß für die Unsymmetrie der Energieeinleitung in die beiden zu schleifenden Flanken.
Genauere Werte des Brems- oder Beschleunigungsmomentes können Dehnungsmeßstreifen am Lagerbock des Teilapparates bieten. Sie unterliegen nicht einer regelungsgebundenen Hysterese. Dieses gilt gleichermaßen für eine Momentenmeßwelle, die zwischen Teilapparat und Königsdorn angeordnet werden kann. Diese Meßwelle liefert ein Torsionsmoment als Maß für die Unsymmetrie der Energieeinleitung in die zu schleifenden Flanken.

Das Schleifbrandrisiko äußert sich im wesentlichen auf zwei Arten: Zum einen äußert es sich auf eine langsame Art, wobei sich die aktive Oberfläche der Schleifscheibe verringert. Das rührt daher, daß sich die Zwischenräume zwischen den in der Schleifscheibe eingelagerten Splittern mit Abrieb zusetzt. Dieser Vorgang geschieht rein zufällig durch die Verteilung der Splitter und kann durch Aufmaßfehler ausgelöst werden. Er ist aber umkehrbar, wenn man der Scheibe Zeit gibt, sich zu erholen und zu reinigen. Der dazu notwendige Reinigungsvorgang ist beispielsweise ein Schleifvorgang mit geringem Vorschub. Das geht langsam vor sich, in der Regel bedarf es zur Reinigung mehr als 20 Zahnflanken.

Zum andern erweist sich eine schnelle Art als relevant für Schleifbrandrisko. Jede Zahnflanke kann überraschend einen Aufmaßfehler bieten, der bereits beim Eintritt der Schleifscheibe in die Zahnlücke ein starkes Abbremsen der Antriebsspindel verursacht. Für diesen Fall wird die Veränderung der Rotationsenergie der Antriebsspindel als Meßgröße herangezogen und mit einem gelernten Drehzahlgradienten verglichen, um das Schleifbrandrisiko zu bestimmen. Sinkt die Drehzahl beim Einfahren in eine Zahnlücke besonders stark ab, ist dies ein Indiz für einen beginnenden Anfangsschleifbrand am Zahnlückenanfang.
Vor allem bei extremer Schrägverzahnung geschieht es, daß bei stark abgenutzter Schleifscheibe die Antriebsspindel und der zu bearbeitende Zahn nachgeben. Die Drehzahl ändert sich nicht mehr linear, sondern exponentiell nach unten. Erst verzögert beginnt der Schleifvorgang. Auch in diesem Fall hilft zur Vermeidung von Schleifbrand nur das unmittelbare Reduzieren des Vorschubs. Der Motorstrom der Antriebsspindel ist von der Zahngröße und der Verzahnung abhängig.

Aufmaßfehler und Abnutzung der Scheibe stellen zusammen einen Risikofaktor dar. Über die Regulierung der Vorschubgeschwindigkeit kann dieses Risiko unterhalb einer kritischen Schwelle gehalten werden, ab der Schleifbrand auftritt. Der Vorschub orientiert sich nicht mehr an einem Kompromiß aus tolerierter Ausfallwahrscheinlichkeit und Wirtschaftlichkeitsgrenze, sondern am augenblicklichen Zustand von Schleifscheibe und Zahnrad.

Die Antriebsspindel nimmt bei guter Schleifleistung wenig Energie auf, während sie bei schlechter Schleifleistung eine hohe Energieaufnahme zeigt.

Anhand von Figuren soll die Erfindung und ihr Einsatzbereich kurz dargestellt werden.
Es zeigen:
- Fig. 1: die schematische Darstellung der Schleifanordnung;
- Fig. 2: die Vorderansicht einer Schleifmaschine;
- Fig. 3: die Aufnahme der zu bearbeitenden Werkstücke;
- Fig. 4: eine Seitenansicht von Teilapparat- und Schleifkopfanordnung der Schleifmaschine und
- Fig. 5: eine Vorderansicht des Schleifkopfes.

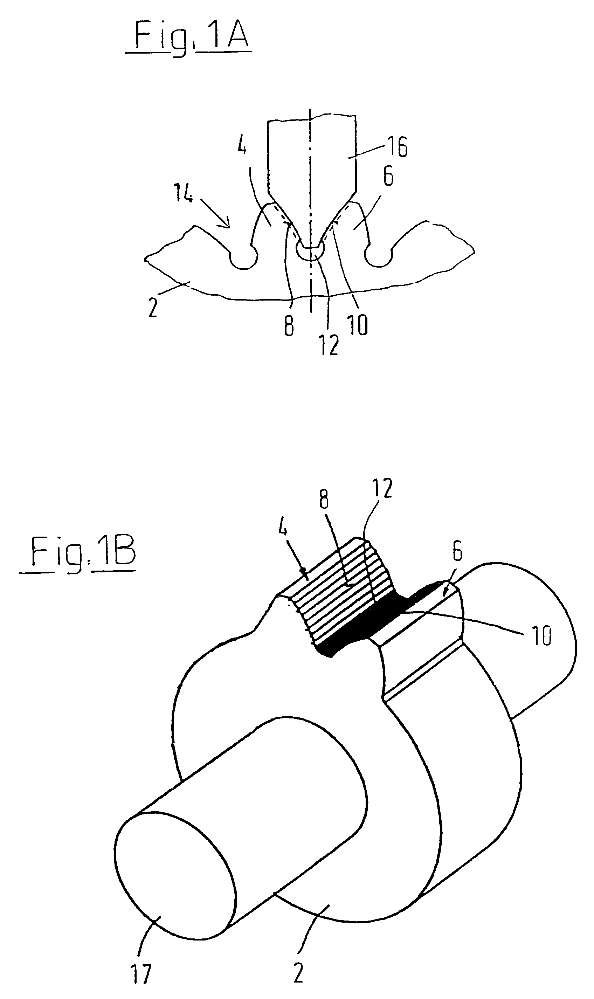

Beim Schleifen von Zahnrädern kommt überwiegend das Längsschleifverfahren mit einer einprofiligen Schleifscheibe zur Anwendung. Im Gegensatz zu Schleifverfahren mit Schleifscheiben, die eine Kontur aufweisen, in der mehrere Profile nebeneinander auf der Schleifscheibe angeordnet sind, weist die einprofilige Schleifscheibe nur gerade das Profil auf, das im zu schleifenden Zahnrad jeweils zwischen zwei Zähnen liegend erzeugt werden soll. Die schematische Darstellung einer solchen einprofiligen Schleifscheibe ist der Fig. 1 zu entnehmen.

In der Fig. 1A ist ein Zahnrad 2 dargestellt, von dem der besseren Übersichtlichkeit wegen nur die beiden Zähne 4 und 6 gezeigt sind. Für die nachfolgenden Erläuterungen soll angenommen werden, daß die durch die einander gegenüberliegenden Zahnflanken 8 und 10 sowie den dazwischenliegenden Zahngrund 12 gebildete Zahnlücke 14 geschliffen werden soll mittels einer einprofiligen Schleifscheibe 16. Die Gestaltung der Außenkontur dieser Schleifscheibe entspricht der Gestaltung der Innenkontur der zu schleifenden Zahnlücke 14.

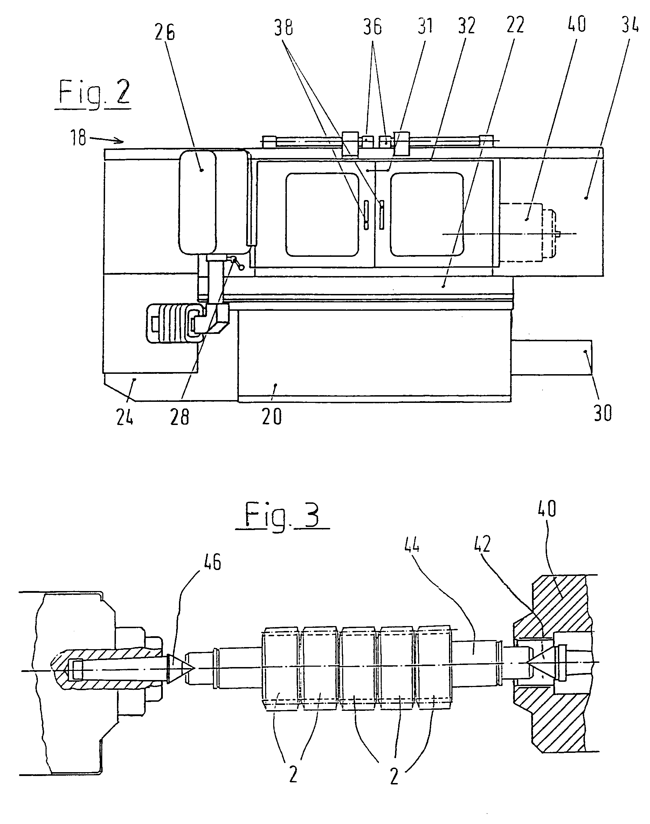

In der Fig. 1B ist perspektivisch ein Zahnrad 2 dargestellt, von dem ebenfalls, der besseren Übersichtlichkeit wegen, nur die beiden Zähne 4 und 6 gezeigt sind. Die der Bearbeitung unterliegende Schleiffläche ist in Fig. 1B schraffiert dargestellt. Während des Schleifvorgangs ist das Zahnrad 2 auf einer Halterung 17 (Königsdorn) angeordnet, die zu einer Schleifmaschine gehört, wie sie in Fig. 2 dargestellt ist. Durch das Schleifen der schraffiert hervorgehobenen Schleiffläche treten an dieser Schleiffläche Temperaturerhöhungen auf, die zu thermischen Gefügeveränderungen in der Werkstückrandschicht führen können, wenn diese Temperaturerhöhungen bestimmte Grenzwerte übersteigen.

Die Fig. 2 zeigt eine allgemein gebräuchliche Schleifmaschineneinheit 18, die zum Schleifen von Zahnrädern Verwendung findet.
Auf einem Maschinenbett 20 ist ein Maschinentisch 22 angeordnet. Eine Schaltschrankkonsole 24 trägt ein Bedienpult 26, das mit einem Klemmhebel 28 versehen ist, wodurch das Bedienpult 26 gemäß individueller Anforderungen des Bedienpersonals verstellt werden kann. Ein solches Bedienpult 26 kann die oben vorgeschlagenen Einrichtungen zur Anzeige von Schleifbrand beinhalten, so daß das Bedienungspersonal immer aktuell über den Schleifzustand der Werkstücke informiert wird. Eine Hubhydraulik 30 ermöglicht eine Verstellung des Maschinentisches 22. Den Zugang zum ansonsten gekapselten Arbeitsraum der Maschine 18 erreicht das Bedienpersonal durch frontale Schiebetüren 31, die ebenso wie die Türen für eine automatische Beschickung 32 zur Maschinenabdeckung 34 gehören. Die Türen für die automatische Beschickung 32 werden über Pneumatikzylinder 36 aktiviert, während sich die Schiebetüren 31 über Bedienungsgriffe 38 öffnen lassen.
In der Fig. 2 ist die Anordnung des Teilapparates 40 an der Maschineneinheit 18 skizziert dargestellt. Der Teilapparat 40 ragt in den Arbeitsraum der Maschine hinein und trägt dort das zu bearbeitende Werkstück oder den die zu bearbeitenden Werkstücke (Zahnräder) tragenden Königsdorn, hier nicht gezeigt, mit.

Eine die zu bearbeitenden Werkstücke tragende Anordnung ist in Fig. 3 gezeigt. Der Teilapparat 40 weist eine Spitze 42 auf, die in eine Aufnahme des Königsdornes 44 eingreift. Auf der Gegenseite ist der Königsdorn 44 von der Reitstockspitze 46 gehalten. Reitstock mit Reitstockspitze 46 sowie Teilapparat 40 mit Spitze 42 entsprechen den Ausführungen, wie sie dem Fachmann auf diesem Gebiet bekannt sind. Auf dem Königsdorn 44 sind mehrere Zahnräder 2 angeordnet. Je nach Gestaltung der zu bearbeitenden Werkstücke sind Reitstockspitze 46 und Teilapparatspitze 42 anzupassen und einzustellen. Während des Bearbeitungsprozesses wird der Königsdorn 44 durch den Teilapparat jeweils um eine Zahnlücke weitergedreht, wobei es nicht erforderlich ist, daß unmittelbar nacheinander auch nebeneinanderliegende Zahnlücken bearbeitet werden. Vielmehr kann aus maschinenbedingten Gründen auch eine Bearbeitung von weiter auseinanderliegenden Zahngründen aufeinanderfolgen.

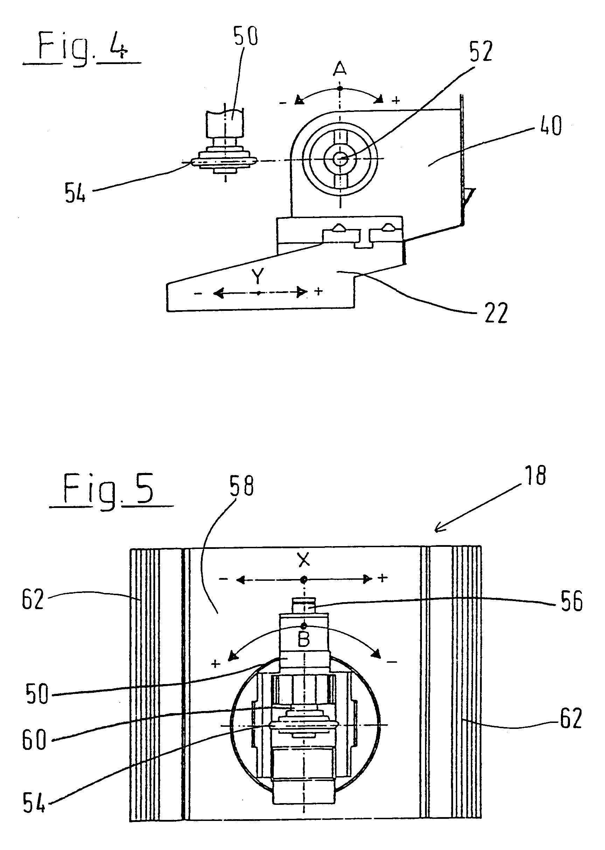

Die Fig. 4 zeigt die Verstellmöglichkeiten des Teilapparates 40 auf, während die Fig. 5 die Anordnung des Schleifkopfes 50 und seine Verstellmöglichkeiten darstellt. So zeigt die Fig. 4 eine Seitenansicht von Teilapparat 40. Die Teilapparatspindel 52 kann dabei eine Drehbewegung um die A-Achse ausführen, und zwar um einen bestimmten Winkelbetrag nach links (-) und nach rechts (+). Die Ansicht zeigt den Blick auf die Teilapparatspindel in der (+X)-Richtung gemäß Fig. 5. Auf einer Y-Achse läßt sich der den Teilapparat 40 tragende Maschinentisch 22 verstellen. Dabei bedeutet eine Tischverstellung in (+)-Richtung ein Abheben des Schleifkopfes 50 vom Werkstück, während eine Verstellung in (-)-Richtung ein Eintauchen des Schleifkopfes 50 in das Werkstück bis auf Schleiftiefe bedeutet.
Die Anordnung des Schleifkopfes 50 mit Schleifscheibe 54 ist in der Fig. 4 nur schematisch dargestellt, während Fig. 5 den Schleifkopf 50 in Vorderansicht darstellt. Der Schleifkopf 50 läßt sich über einen Griff 56 in seiner Höhe verstellen und dabei mit einer sehr feinen Einteilung genau auf das zu bearbeitende Werkstück einstellen. Ebenfalls sind Verstellmöglichkeiten gegeben, die den gesamten Schleifschlitten 58 der Maschine 18 verschieben oder den Schleifkopf 50 schwenken lassen.
So ermöglicht die Verschiebung des Schleifschlittens 58 in (+X)-Richtung einen Schleifvorschub und die Bewegung des Schleifschlittens 58 in (-X)-Richtung einen Rückhub im Schleifvorgang. Ein Schwenken des Schieifkopf 50 um die B-Achse ergibt in (+B)-Richtung eine Einstellung der Schleifscheibe 54 für Werkstücke mit Schrägverzahnung mit einer Steigungsrichtung "rechtssteigend". Ein Schwenken des Schleifkopfs 50 ergibt in (-B)-Richtung eine Einstellung der Schleifscheibe 54 für Werkstücke mit Schrägverzahnung mit Steigungsrichtung "linkssteigend". Werkstücke, in die eine Geradverzahnung bzw. gerade Zahnlücken parallel zur Werkstückachse eingeschliffen werden, erfordern eine exakt senkrechte Stellung der Schleifspindel 60 des Schleifkopfes 50. Die Schleifscheibe 54 weist als Außenkontur die Profilierung der Innenkontur der zu schleifenden Zahnlücke auf. Beim Längsschleifen mit einprofiligen Schleifscheiben werden die Zahnlücken nacheinander geschliffen. Dabei wird die Schleifscheibe entsprechend der gewünschten Schrägstellung zur Werkstückachse geneigt. Es können alle vorkommenden Schrägstellungen geschliffen werden.

Über geeignete und hier nicht gezeigte Mittel ist der Schleifkopf 50 am Schleifschlitten 58 befestigt. Auf beiden Seiten der Schleifschlittens 58 sind Faltenbälge 62 vorgesehen, die sich bei Verschiebung des Schleifschlittens 58 auf der X-Achse diesen Bewegungen anpassen.

Durch die Vermeidung von Schleifbrandschäden bzw. durch die Erkennung von Schleifbrand an einzelnen Werkstücken ist es nicht länger erforderlich, Werkstücke einer Ätzbaduntersuchung zu unterziehen. Daher kann auf die umweltbelastenden Ätzbadverfahren verzichtet werden.

Die Erfindung erschöpft sich nicht in den hier aufgeführten Anordnungen. Sie beinhaltet auch alle dem Fachmann auf diesem Sachgebiet geläufigen Abwandlungen, die auf der Erfindung aufbauen.
Die für das erfindungsgemäße Verfahren erforderlichen Parameter lassen sich den dargestellten wesentlichen Bauteilen von Schleifmaschinen entweder auf den vorgeschlagenen Wegen oder mit dem Fachmann geläufigen Maßnahmen erzielen, ohne daß es dafür einer genaueren Darstellung in der Zeichnung bedarf. Komponenten der Meßwertaufnahme wird der Fachmann so an den Maschineneinrichtungen anordnen, daß er unter Berücksichtigung der erwarteten und oben dargestellten Beanspruchungen plausible Meßgrößen erhält, die er nach dem erfindungsgemäßen Verfahren einsetzt.

### Bezugszeichen

- 2: Zahnrad
- 4: Zahn
- 6: Zahn
- 8: Zahnflanke
- 10: Zahnflanke
- 12: Zahngrund
- 14: Zahnlücke
- 16: Schleifscheibe
- 17: Halterung
- 18: Schleifmaschineneinheit
- 20: Maschinenbett
- 22: Maschinentisch
- 24: Schaltschrankkonsole
- 26: Bedienpult
- 28: Klemmhebel
- 30: Hydraulik für Hubbewegungen
- 31: Schiebetür
- 32: Tür für automatische Beschickung
- 34: Maschinenabdeckung
- 36: Pneumatikzylinder
- 38: Bedienungsgriff
- 40: Teilapparat
- 42: Teilapparatspitze
- 44: Königsdorn
- 46: Reitstockspitze
- 50: Schleifkopf
- 52: Teilapparatspindel
- 54: Schleifscheibe
- 56: Griff für Höhenverstellung
- 58: Schleifschlitten
- 60: Schleifspindel
- 62: Faltenbälge

## Patentansprüche

1. Verfahren zur Vermeidung von thermischer Überbeanspruchung eines Werkstückes (2) beim Schleifen, sogenanntem Schleifbrand, mit einer Schleifeinrichtung (18) mit Schleifspindel (60) und Antriebsmaschine, dadurch **gekennzeichnet,** daß die Drehzahl der Schleifspindel (60) gemessen wird, dieser Wert einer Datenverarbeitung zugeführt wird, daraus ein Maß für die kinetische Energie der Schleifspindel (60) ermittelt wird und dieses Maß mit einem Schleifbrand charakterisierenden Referenzwert verglichen wird.

2. Verfahren zur Vermeidung von thermischer Überbeanspruchung eines Werkstückes (2) beim Schleifen nach Anspruch 1, dadurch **gekennzeichnet,** daß mittels einer Warneinrichtung angezeigt wird, welche Werkstücke (2) Schleifbrand erlitten haben.

3. Verfahren zur Vermeidung von thermischer Überbeanspruchung eines Werkstückes (2) beim Schleifen nach Anspruch 2, dadurch **gekennzeichnet,** daß eine optische Warneinrichtung verwendet wird.

4. Verfahren zur Vermeidung von thermischer Überbeanspruchung eines Werkstückes (2) beim Schleifen nach Anspruch 2, dadurch **gekennzeichnet,** daß eine akustische Warneinrichtung verwendet wird.

5. Verfahren zur Vermeidung von thermischer Überbeanspruchung eines Werkstückes (2) beim Schleifen nach Anspruch 2, dadurch **gekennzeichnet,** daß eine kombinierte, optisch akustische Warneinrichtung verwendet wird.

6. Verfahren zur Vermeidung von thermischer Überbeanspruchung eines Werkstückes (2) beim Schleifen nach Anspruch 1, dadurch **gekennzeichnet,** daß Schwankungen der Netzspannung ermittelt werden und daraus resultierende Schwankungen der Drehzahl der Antriebsspindel (60) berücksichtigt werden.

7. Verfahren zur Vermeidung von thermischer Überbeanspruchung eines Werkstückes (2) beim Schleifen nach Anspruch 1, dadurch **gekennzeichnet,** daß der Vorschub der Antriebsspindel (60) in Abhängigkeit von der umgesetzten kinetischen Energie eingestellt wird.

8. Verfahren zur Vermeidung von thermischer Überbeanspruchung eines Werkstückes (2) beim Schleifen nach Anspruch 1, dadurch **gekennzeichnet,** daß der Vorschub nach Überschreitung des Referenzwertes zurückgenommen wird.

9. Verfahren zur Vermeidung von thermischer Überbeanspruchung eines Werkstückes (2) beim Schleifen nach Anspruch 1, dadurch **gekennzeichnet,** daß der Vorschub derart geregelt wird, daß der Schwellwert nicht überschritten wird.

10. Verfahren zur Vermeidung von thermischer Überbeanspruchung eines Werkstückes (2) beim Schleifen nach Anspruch 1, dadurch **gekennzeichnet,** daß beim Schleifen von Zahnrädern (2) das Verdrehmoment eines Teilapparates (40) der Schleifeinrichtung (18) ermittelt wird, dieser Wert der Datenverarbeitung zugeführt wird, daraus ein Maß für die Asymmetrie der Aufmaßverteilung einer Zahnlücke (14) ermittelt wird und dieses Maß zur Steuerung des Vorschubes mitberücksichtigt wird.

11. Verfahren zur Vermeidung von thermischer Überbeanspruchung eines Werkstückes (2) beim Schleifen nach Anspruch 1, dadurch **gekennzeichnet,** daß beim Schleifen von Zahnrädern (2) das Verdrehmoment eines Teilapparates (40) der Schleifeinrichtung (18) ermittelt wird, dieser Wert der Datenverarbeitung zugeführt wird, daraus ein Maß für die Asymmetrie der Abnutzung der Schleifscheibenseiten ermittelt wird und dieses Maß zur Steuerung des Vorschubes mitberücksichtigt wird.

12. Verfahren zur Vermeidung von thermischer Überbeanspruchung eines Werkstückes (2) beim Schleifen nach Anspruch 10 oder 11, dadurch **gekennzeichnet,** daß das Verdrehmoment über den vom Teilapparat (40) zur Drehung mit oder gegen die in eine Zahnlücke (14) eindringende Schleifscheibe (16, 54) benötigten Motorstrom ermittelt wird.

13. Verfahren zur Vermeidung von thermischer Überbeanspruchung eines Werkstückes (2) beim Schleifen nach Anspruch 10 oder 11, dadurch **gekennzeichnet,** daß das Verdrehmoment über in den Teilapparat (40) eingeleitete Biegemomente bestimmt wird.

14. Verfahren zur Vermeidung von thermischer Überbeanspruchung eines Werkstückes (2) beim Schleifen nach Anspruch 13, dadurch **gekennzeichnet,** daß die Biegemomente mit Dehnungsmeßstreifen aufgenommen werden.

15. Verfahren zur Vermeidung von thermischer Überbeanspruchung eines Werkstückes (2) beim Schleifen nach Anspruch 10 oder 11, dadurch **gekennzeichnet,** daß das Verdrehmoment über eine zwischen Teilapparat (40) und Königswelle angeordnete Momentenmeßwelle als Torsionsmoment aufgenommen wird.

16. Schleifvorrichtung unit einer Antriebsmaschine mit Schleifspindel, einer Vorrichtung zur Messung der Drehzahl der Schleifspindel, einem Teilapparat zum Schleifen von Zahnflanken eines Zahnrades und einer Datenverarbeitungsanlage, dadurch **gekennzeichnet,** daß sie zur Durchführung eines Verfahrens nach wenigstens einem der Ansprüche 10 bis 15, eine Vorrichtung zur Messung des Verdrehmomentes des Teilapparates aufweist, wobei in der Datenverarbeitungsanlage das Verdrehmoment zur Steuerung des Vorschubes mitberücksichtigt wird und wobei die Datenverarbeitungsanlage, die Drehzahlmeßvorrichtung und die Vorrichtung zur Messung des Verdrehmomentes zum Signalaustausch miteinander verbunden sind.

## Claims

1. A process for preventing thermal overloading of a workpiece (2) during grinding, so-called overheating when grinding, with a grinding apparatus (18) with grinding spindle (60) and drive motor, characterised in that the speed of rotation of the grinding spindle (60) is measured, this value is supplied to a data processor, a quantity is determined therefrom for the kinetic energy of the grinding spindle (60) and this quantity is compared with a reference value characterising overheating.

2. A process according to claim 1 for preventing thermal overloading of a workpiece (2) during grinding, characterised in that a warning device is used to indicate which workpieces (2) have suffered overheating during grinding.

3. A process according to claim 2 for preventing thermal overloading of a workpiece (2) during grinding, characterised in that a visual warning device is used.

4. A process according to claim 2 for preventing thermal overloading of a workpiece (2) during grinding, characterised in that an audible warning device is used.

5. A process according to claim 2 for preventing thermal overloading of a workpiece (2) during grinding, characterised in that a combined audio-visual warning device is used.

6. A process according to claim 1 for preventing thermal overloading of a workpiece (2) during grinding, characterised in that fluctuations in mains voltage are detected and allowances are made for resultant fluctuations in the speed of rotation of the drive spindle (60).

7. A process according to claim 1 for preventing thermal overloading of a workpiece (2) during grinding, characterised in that the feed of the drive spindle (60) is adjusted in dependence on the converted kinetic energy.

8. A process according to claim 1 for preventing thermal overloading of a workpiece (2) during grinding, characterised in that feed is reduced when the reference value is exceeded.

9. A process according to claim 1 for preventing thermal overloading of a workpiece (2) during grinding, characterised in that feed is regulated in such a way that the threshold value is not exceeded.

10. A process according to claim 1 for preventing thermal overloading of a workpiece (2) during grinding, characterised in that, in the case of the grinding of gears (2), the twisting moment of a dividing attachment (40) of the grinding device (18) is detected, this value is supplied to the data processor, a quantity is determined therefrom for the asymmetry of the overmeasure distribution of a tooth space (14) and this quantity is also taken into consideration in controlling feed.

11. A process according to claim 1 for preventing thermal overloading of a workpiece (2) during grinding, characterised in that, in the case of the grinding of gears (2), the twisting moment of a dividing attachment (40) of the grinding device (18) is detected, this value is supplied to the data processor, a quantity is determined therefrom for the asymmetry of the wear to the grinding wheel sides and this quantity is also taken into consideration in controlling feed.

12. A process according to claim 18 or claim 11 for preventing thermal overloading of a workpiece (2) during grinding, characterised in that the twisting moment is determined by means of the motive current required by the dividing attachment for rotation with or counter to the grinding wheel (16, 54) penetrating into a tooth space (14).

13. A process according to claim 10 or claim 11 for preventing thermal overloading of a workpiece (2) during grinding, characterised in that the twisting moment is determined by means of bending moments introduced into the dividing apparatus (40).

14. A process according to claim 13 for preventing thermal overloading of a workpiece (2) during grinding, characterised in that the bending moments are recorded by wire strain gauges.

15. A process according to claim 10 or claim 11 for preventing thermal overloading of a workpiece (2) during grinding, characterised in that the twisting moment is recorded as a torsional moment by a moment measuring shaft arranged between the dividing apparatus (40) and the vertical shaft.

16. A grinding device comprising a drive motor with grinding spindle, a device for measuring the speed of rotation of the grinding spindle, a dividing attachment for the profile grinding of gear teeth and a data processing system, characterised in that, for implementing a process according to at least one of claims 10 to 15, it comprises a device for measuring the twisting moment of the dividing attachment, wherein the twisting moment is taken into consideration in the data processing system in controlling feed, and wherein the data processing system, the rotational speed measuring device and the device for measuring the twisting moment are connected together for the purpose of the exchange of signals.

## Revendications

1. Procédé pour éviter l'excès de contrainte thermique auxquelles est soumis une pièce d'usinage (2) lors du processus de meulage, appelé brûlure de meulage, effectué au moyen d'une installation de meulage (18) comportant un axe (60) et un moteur d'entraînement, caractérisé en ce que l'on mesure la vitesse de rotation de l'axe (60), en ce que l'on transmet cette valeur à une unité de traitement des données, en ce que l'on en déduit une mesure de la valeur de l'énergie cinétique de l'axe (60) de la meule, et en ce que l'on compare cette valeur à une valeur de référence caractéristique de la brûlure de meulage.

2. Procédé pour éviter l'excès de contrainte thermique auxquelles est soumis une pièce d'usinage (2) lors du processus de meulage selon la revendication 1, caractérisé en ce que l'on signale au moyen d'une installation d'alarme quelles sont les pièces (2) qui ont subi une brûlure de meulage.

3. Procédé pour éviter l'excès de contrainte thermique auxquelles est soumis une pièce d'usinage (2) lors du processus de meulage selon la revendication 2, caractérisé en ce que l'on utilise une installation d'alarme optique.

4. Procédé pour éviter l'excès de contrainte thermique auxquelles est soumis une pièce d'usinage (2) lors du processus de meulage selon la revendication 2, caractérisé en ce que l'on utilise une installation d'alarme acoustique.

5. Procédé pour éviter l'excès de contrainte thermique auxquelles est soumis une pièce d'usinage (2) lors du processus de meulage selon la revendication 2, caractérisé en ce que l'on utilise une installation d'alarme optique et acoustique combinée.

6. Procédé pour éviter l'excès de contrainte thermique auxquelles est soumis une pièce d'usinage (2) lors du processus de meulage selon la revendication 1, caractérisé en ce que l'on provoque des fluctuations de la tension du réseau, et en ce que l'on tient compte de variation de la vitesse de rotation de l'axe (60) résultant de ces fluctuations.

7. Procédé pour éviter l'excès de contrainte thermique auxquelles est soumis une pièce d'usinage (2) lors du processus de meulage selon la revendication 1, caractérisé en ce que l'avance de l'axe d'entraînement (60) est régulée en fonction de l'énergie cinétique générée.

8. Procédé pour éviter l'excès de contrainte thermique auxquelles est soumis une pièce d'usinage (2) lors du processus de meulage selon la revendication 1, caractérisé en ce que l'avance est réduite après dépassement de la valeur de référence.

9. Procédé pour éviter l'excès de contrainte thermique auxquelles est soumis une pièce d'usinage (2) lors du processus de meulage selon la revendication 1, caractérisé en ce que l'avance est régulée de telle manière que la valeur seuil ne soit pas dépassée.

10. Procédé pour éviter l'excès de contrainte thermique auxquelles est soumis une pièce d'usinage (2) lors du processus de meulage selon la revendication 1, caractérisé en ce que, lors du meulage de roues dentées (2), l'on détermine le couple de rotation d'un appareil diviseur (40) de l'installation de meulage (18), l'on transmet sa valeur à l'unité de traitement des données, l'on en déduit une valeur de l'asymétrie des répartitions dimensionnelles d'un intervalle (14) entre les dents, et en ce que l'on prend en compte cette valeur pour commander l'avance.

11. Procédé pour éviter l'excès de contrainte thermique auxquelles est soumis une pièce d'usinage (2) lors du processus de meulage selon la revendication 1, caractérisé en ce que, lors du meulage de roues dentées (2), l'on détermine le couple de rotation d'un appareil diviseur (40) de l'installation de meulage (18), l'on transmet sa valeur à l'unité de traitement des données, l'on en déduit une valeur de l'asymétrie, de l'usure des côtés du disque de meulage, et en ce que l'on prend en compte cette valeur pour commander l'avance.

12. Procédé pour éviter l'excès de contrainte thermique auxquelles est soumis une pièce d'usinage (2) lors du processus de meulage selon la revendication 10 ou 11, caractérisé en ce que l'on détermine le couple de rotation au moyen du courant moteur nécessité par l'appareil diviseur (40) pour entraîner, dans le même sens ou en sens contraire, un disque de meulage (16, 54) engagé dans un intervalle (14) entre les dents.

13. Procédé pour éviter l'excès de contrainte thermique auxquelles est soumis une pièce d'usinage (2) lors du processus de meulage selon la revendication 10 ou 11, caractérisé en ce que le couple de rotation est déterminé par un moment de flexion généré à l'intérieur de l'appareil diviseur (40).

14. Procédé pour éviter l'excès de contrainte thermique auxquelles est soumis une pièce d'usinage (2) lors du processus de meulage selon la revendication 13, caractérisé en ce que les moments de flexion sont déterminés par des lames de mesure agencées pour se dilater.

15. Procédé pour éviter l'excès de contrainte thermique auxquelles est soumis une pièce d'usinage (2) lors du processus de meulage selon la revendication 10 ou 11, caractérisé en ce que le couple de rotation est déterminé sous la forme d'un moment de torsion par un arbre de mesure du couple monté entre l'appareil diviseur (40) et l'arbre.

16. Installation de meulage comportant un moteur d'entraînement, un axe de meulage, un dispositif de mesure d'un nombre de tours de rotation de l'axe de meulage, un appareil diviseur pour meuler des flancs de dents d'une roue dentée et une unité de traitement de données, pour la mise en oeuvre du procédé selon l'une des revendications 10 à 15, caractérisée en ce qu'elle comprend un dispositif de mesure du couple de rotation de l'appareil diviseur, le couple étant pris en compte dans l'unité de traitement des données pour commander l'avance et l'unité de traitement des données, le dispositif de mesure du nombre de tours et le dispositif pour la mesure du couple de rotation étant couplés entre eux pour l'échange de signaux.
